# EUROPÄISCHE PATENTSCHRIFT

(11) **EP 2 234 751 B1**
(45) Veröffentlichungstag und Bekanntmachung des Hinweises auf die Patenterteilung: **22.03.2017**
(21) Anmeldenummer: 08867434.6
(22) Anmeldetag: 16.12.2008
(51) Int. Cl.: B23K 26/04, B23K 26/08, B23K 26/24, B60N 2/68

(54) **VERFAHREN UND EINRICHTUNG ZUM SCHWEISSEN VON SITZSTRUKTUREN SOWIE SITZ**
PROCESS AND DEVICE FOR WELDING SEAT STRUCTURES, AND SEAT
PROCÉDÉ ET DISPOSITIF DE SOUDAGE DE STRUCTURES DE SIÈGE, ET SIÈGE

(30) Priorität: 21.12.2007 DE 102007062952
(43) Veröffentlichungstag der Anmeldung: 06.10.2010
(73) Patentinhaber: KUKA Industries GmbH, 86165 Augsburg (DE); Karosseriewerke Dresden GmbH, 01454 Radeberg (DE)
(72) Erfinder: EBERL, Martin, 86156 Augsburg (DE); ENGLHARD, Anton, 86574 Petersdorf/Schönleiten (DE); HERRMANN, Manfred, 86633 Neuburg/Donau (DE); MENTEN, Rainer, 01468 Moritzburg (DE); ULLRICH, Jens, 01259 Dresden (DE); SCHNEIDER, Harald, 38548 Velpke (DE)
(74) Vertreter: Ernicke, Klaus Stefan
(86) Internationale Anmeldenummer: PCT/EP2008/010709
(87) Internationale Veröffentlichungsnummer: WO 2009/083137

(56) Entgegenhaltungen:
- EP-A- 0 518 658
- EP-A- 1 972 407
- EP-A2- 0 266 070
- DE-A1- 10 335 501
- DE-A1-102006 004 467
- DE-B3- 10 326 377
- FR-A- 2 880 307
- US-A- 4 665 294
- US-A- 4 834 686
- US-A- 4 907 169
- US-A1- 2005 061 786
- US-A1- 2005 166 398

## Beschreibung

Die Erfindung betrifft ein Verfahren und eine Einrichtung zum Schweißen von Sitzstrukturen sowie einen Sitz mit den Merkmalen im Oberbegriff der Sach- und Verfahrenshauptansprüche.

Aus der DE 10 2006 004 467 A1 ist eine Struktur der Rückenlehne einer Kraftfahrzeugs bekannt, wobei ein U-förmiges Rahmenprofil mit seinen Profilschenkeln auf ein plattenförmiges Blechteil von oben mit formschlüssiger Führung an Wellen- oder Nutenprägungen im Blechteil aufgesetzt und verschweißt wird.

Die US 4,907,169 A und die EP 0 518 658 A2 zeigen Laserschweißroboter mit einer Nahtdetektion durch ein separates und dem Laserstrahl voreilendes Kammerasystem.

Die US 4,665,294 A befasst sich dem Laserschweißen von Leichtmetalllegierungen.

Die DE 103 35 501 A1 zeigt ein robotergeführtes Laserschweißwerkzeug mit einer Blendeeinrichtung und einem durch den Strahlengang blickenden Kamerasystem zur online Prozessüberwachung mittels Beobachtung des Prozessbereichs beim Schweißen.

Aus der Praxis ist es bekannt, Sitzstrukturen von PKWs, insbesondere Hinterlehnenstrukturen, aus einem plattenförmigen Deckblech und mehreren angeschweißten Stützprofilen zu bilden. Hierbei wurden U-förmige Profile durch Buckelschweißen mit dem flachen Blech verbunden.

Beim Buckelschweißen ist keine ausreichende Prozesssicherheit gewährleistet. Außerdem ergeben sich ungünstige Festigkeits- und Steifigkeitseigenschaften.

Zur Herstellung von Sitzstrukturen wird in der Praxis auch das Widerstandspunktschweißen und das Laserschweißen eingesetzt. In beiden Fällen werden Hutprofile mit seitlich abgewinkelten breiten Flanschen verwendet, an denen sich die Schweißstellen oder Schweißnähte befinden. Diese Technik hat den Nachteil eines erhöhten Materialeinsatzes für die Hutprofile. Es ergibt sich auch ein indirekter Kraftverlauf durch die Biegestellen an den Flanschübergängen der Hutprofile.

Man kennt außerdem das MIG-Schweißen oder MAG-Schweißen zur Verbindung von U-Profilen mit flachen Blechen. Hierbei wird vom U-Profil her geschweißt, was einen ausreichend großen Zugang der Schweißstellen verlangt.

Es ist daher Aufgabe der vorliegenden Erfindung, eine bessere Technik zum Schweißen von Sitzstrukturen und verbesserte Sitze aufzuzeigen.

Die Erfindung löst diese Aufgabe mit den Merkmalen in den Sach- und Verfahrensansprüchen.
Mit der erfindungsgemäßen Schweißtechnik lassen sich geschlossene oder quasi geschlossene Rohr- oder Profilstrukturen aus im T-Stoß geschweißten U-Profilen und Deckblechen schaffen, die eine besonders hohe Festigkeit und Steifigkeit haben. Zugleich kann durch die U-Form Material eingespart werden. Für derartige Schweißverbindungen können Leichtmetalle eingesetzt werden, was den Leichtbau noch weiter verbessert. Vor allem im Fahrzeugbau ist dies von besonderem Vorteil. Außerdem ergeben sich Kostensenkungen und eine Kompensation der eingangs genannten Nachteile des Standes der Technik.

Die Stege der U-Profile können eine geringe Dicke haben, was aus Gründen der Material- und Kostenersparnis besonders vorteilhaft ist. Um diese dünnen Stege trotzdem mit einem energiereichen Strahl, z.B. einem Laserstrahl oder Elektronenstrahl, schweißen zu können, werden die Stege mittels einer von einem Manipulator, vorzugsweise einem Gelenkarmroboter, mitgeführten Messeinrichtung zunächst vermessen, wobei ggf. die Roboterbahn bei Abweichungen zur Referenz korrigiert wird. Anschließend wird das Deckblech aufgelegt, und das Verschweißen erfolgt blind oder verdeckt nach den korrigierten Bahnwerten. Hierbei werden die Strahlnähte durch das Deckblech hindurch auf die Stirnenden der Profilstege eingeschweißt.

Für die genaue Vermessung ist eine optische Erfassungseinrichtung, z.B. eine digitale Kamera mit einem Bildsensor mit hoher Auflösung, vorgesehen. Für die Messgenauigkeit ist es günstig, dass die Blickrichtung der optischen Erfassungseinrichtung mit dem Strahl fluchtet.

Die nach dem erfindungsgemäßen Verfahren hergestellte Sitzstruktur bzw. der hieraus gebaute Sitz haben den Vorteil einer hohen Festigkeit und Steifigkeit in Verbindung mit einem geringen Gewicht. Außerdem sind die Herstellkosten niedrig.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Schweißeinrichtung für eine Sitzstruktur in Seitenansicht,
- Figur 2:: eine schematische Darstellung der Vermessung von Profilstegen,
- Figur 3:: eine schematische Darstellung des verdeckten Schweißens eines auf das Profil aufgelegten Deckblechs,
- Figur 4 und 5:: Darstellungen eines Fahrzeugsitzes und seiner Hinterlehnenstruktur sowie deren Teilen und
- Figur 6:: eine schematische Draufsicht auf eine Schweißstation.

Die Erfindung betrifft ein Verfahren und eine Schweißeinrichtung (1) zum Schweißen von Sitzstrukturen (15) von Sitzen (21), insbesondere Fahrzeugsitzen. Die Erfindung betrifft ferner einen nach diesem Verfahren hergestellten Sitz (21) bzw. dessen Sitzstruktur (15).

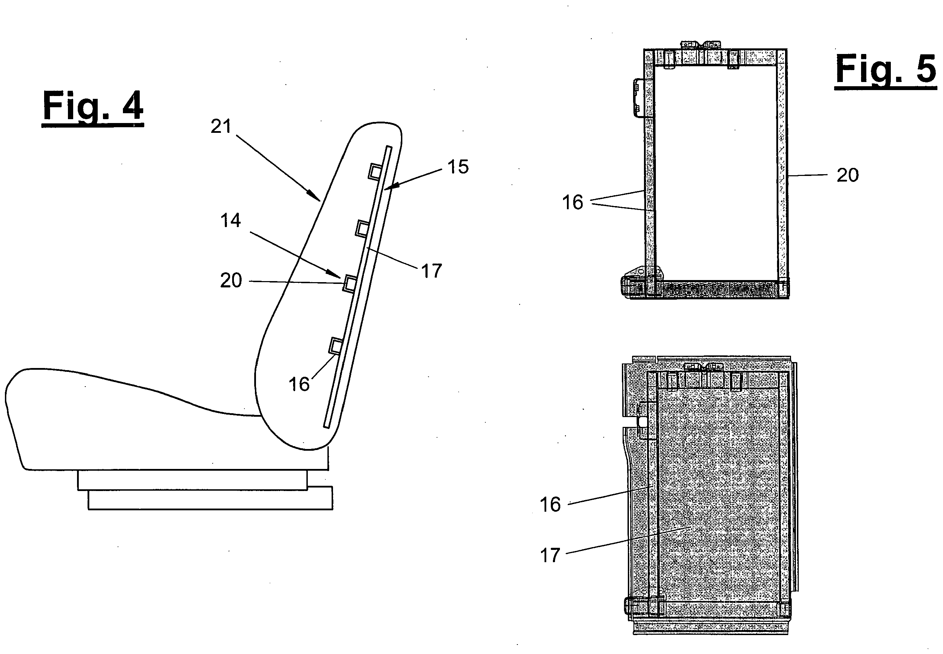

Ein solcher Sitz (21) ist z.B. in Form eines Fahrzeugsitzes für PKWs in Figur 4 in Seitenansicht dargestellt. Er besitzt eine Hinterlehnenstruktur (15) der nachstehend beschriebenen Art. In entsprechender Weise können auch andere Sitzstrukturen an anderen Stellen des Sitzes (21) hergestellt und ausgebildet sein.

Die Sitzstruktur oder Hinterlehnenstruktur (15) besteht aus den in Figur 5 dargestellten ein oder mehreren Stützprofilen (20) und mindestens einem plattenförmigen Deckblech (17). Die Stützprofile (20) sind im Querschnitt U-förmig ausgebildet und weisen abstehende parallele Schenkel oder Stege (16) auf. Auf den Stirnseiten dieser Stege (16) wird das Deckblech (17) im T-Stoß stumpf aufgeschweißt. Die Stützprofile (20) können eine beliebige Ausrichtung haben. Sie können z.B. wie in Figur 4 parallel ausgerichtet sein. Alternativ können sie gemäß Figur 5 einen umlaufenden Rahmen bilden und hierfür untereinander durch Schweißnähte oder auf andere Weise verbunden sein. Bei diesem Stützrahmen weisen alle Stege (16) in die gleiche Richtung.

Die Stützprofile (20) und das Deckblech (17) bilden durch ihre Schweißverbindung an den Stegenden jeweils eine im Querschnitt geschlossene oder zumindest weitgehend geschlossene Rohrstruktur (14), die eine besonders hohe Festigkeit und Steifigkeit hat. Das Deckblech (17) kann in der gezeigten Ausführungsform z.B. den plattenförmigen Bestandteil einer Hinterlehne bilden, die durch die Rohrstrukturen (14) versteift ist.

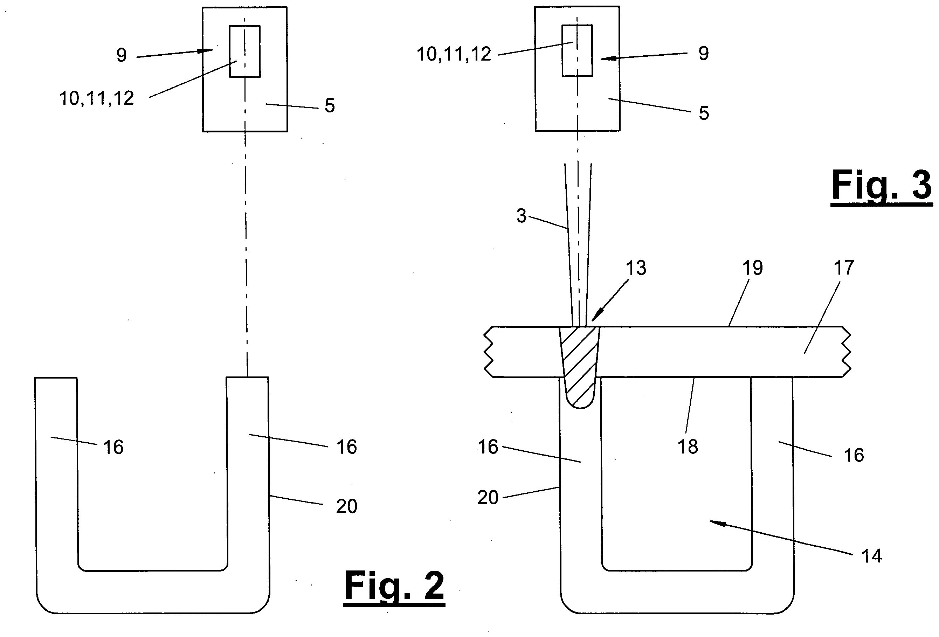

Die Schweißnähte (13) werden durch einen energiereichen Strahl (3) erzeugt, der z.B. als Laserstrahl oder als Elektronenstrahl ausgebildet sein kann. Die Schweißnähte (13) werden hierbei von der Rückseite (19) des Deckblechs (17) her und durch das Deckblech (17) hindurch auf die planen Stirnseiten der Profilstege (16) geschweißt. Figur 3 zeigt diese Anordnung in einer abgebrochenen Darstellung. Das Deckblech (17) wird hierzu mit seiner Vorderseite (18) auf die Stegenden gelegt und anschließend mit dem Strahl (3) von der Rückseite (19) her angeschweißt.

Um ein solches verdecktes oder blindes Schweißen zu ermöglichen, werden die Profilstege (16) in offener Lage und vor dem Auflegen des Deckblechs (17) vermessen. Hierdurch können eventuelle Abweichungen gegenüber der Referenzlage erkannt und korrigiert werden. Dies ermöglicht ein genaues Schweißen, wobei der Strahl (3) exakt auf die Stirnflächen der verdeckten Stege (16) zielen kann. Diese in Figur 3 verdeutlichte Zielgenauigkeit erlaubt den Einsatz dünnwandiger Stege (16), wodurch die Gestaltung der U-Profile (20) sich vorrangig nach Bau- und Stabilitätserfordernissen richten kann. Die Stützprofile (20) und das Deckblech (19) können aus Metall, insbesondere Stahl oder Edelstahl oder Leichtmetalllegierungen aus Aluminium oder Magnesium oder dgl. bestehen.

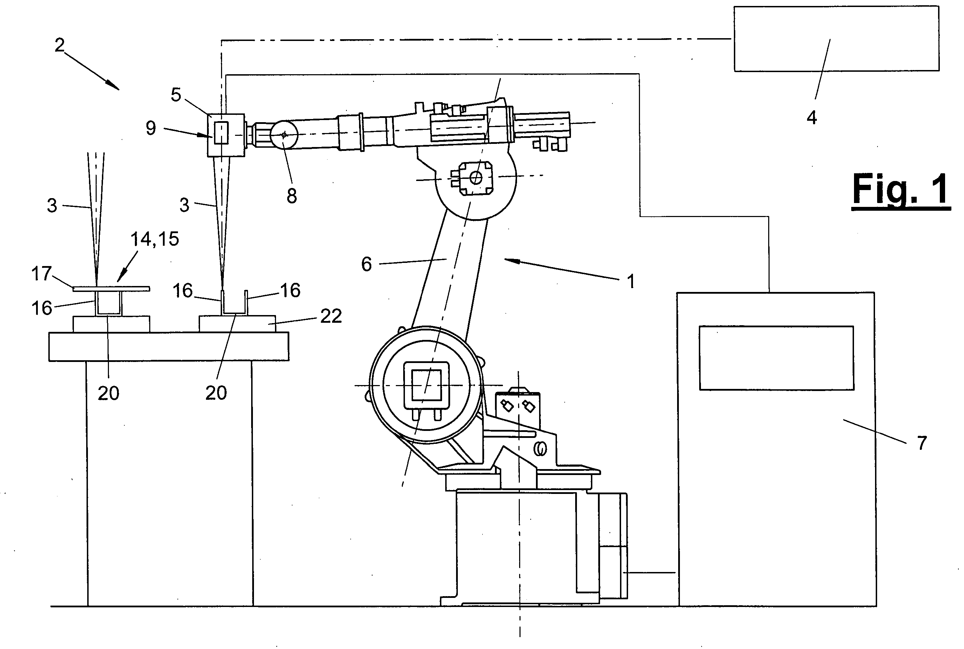

Figur 1 zeigt die Schweißeinrichtung (1). Sie besteht aus mindestens einem mehrachsigen Manipulator (6) mit einer Manipulatorsteuerung (7) und einer mehrachsigen Manipulatorhand (8). Der Manipulator (6) kann rotatorische und/oder translatorische Achsen besitzen. In der gezeigten Ausführungsform ist er als Gelenkarmroboter mit mindestens sechs Achsen ausgebildet.

Der energiereiche Strahl (3), insbesondere der Laserstrahl, wird in einer geeigneten Strahlquelle (4), z.B. einer Laserquelle, erzeugt und über geeignete Leitungen, z.B. flexible Lichtfaserleitungen, gelenkige Rohre oder dgl. zu einem Strahlkopf oder Laserkopf (5) geleitet, der an der Manipulatorhand (8) angeordnet ist und vom Manipulator (6) im Raum bewegt wird. Der Strahlkopf (5) fokussiert den Strahl (3) und richtet ihn auf das Deckblech (17).

Der Manipulator (6) führt auch die vorher erwähnte Messeinrichtung (9) mit. Diese ist an oder im Strahlkopf (5) angeordnet. Sie besitzt eine optische Erfassungseinrichtung (10), deren Blickrichtung mit dem Strahl (3) fluchtet. Mit der optischen Erfassungseinrichtung (10), die z.B. als Digitalkamera mit einer Bildaufnahmeeinrichtung (11), z.B. einem Bildsensor mit hoher Auflösung, ausgebildet ist, werden die Stege (16) bildmäßig erfasst und vermessen. Hierbei wird die Breite, Form, Lage und Ausrichtung der freien Enden der Stege (16) durch eine Bildauswertung (12) ermittelt. Die Daten können über eine Leitungsverbindung oder drahtlos von der Messeinrichtung (9) an die Manipulatorsteuerung (7) übermittelt werden.

Durch die Bildauswertung (12) können eventuelle Abweichungen der Stege (16), insbesondere nach Lage, Form oder Ausrichtung, gegenüber der Referenz festgestellt werden. Nach dem Messergebnis kann die vom Manipulator (6) verfolgte und in seiner Manipulatorsteuerung (7) gespeicherte Roboterbahn und die vorgesehene Schweißnaht (13) ausgerichtet und bei Auftreten von gemessenen Abweichungen korrigiert werden. Beim Schweißen trifft der vom Manipulator (6) geführte Strahl (3) exakt auf die Rückseite (19) des Deckblechs (17), wobei die Naht (13) z.B. mittig entlang der Stege (16) gelegt werden kann.

Wie Figur 1 verdeutlicht, wird der als Remote-Laser ausgebildete Strahlkopf (5) mit der Messeinrichtung (9) vom Manipulator (6) mit einem größeren Abstand über den ein oder mehreren in einer Aufspannung (22) fixierten Stützprofilen (20) gehalten. Zum Vermessen bewegt der Manipulator (6) die Messeinrichtung (9) entlang der Stege (16), wobei diese zumindest an den vorgesehenen Schweißstellen vermessen werden. Hierbei können die Stege (16) an mehreren Stellen entlang ihrer Erstreckung vermessen werden. Figur 1 verdeutlicht dies am rechten Stützprofil (20). Im Zuge der Vermessung können außerdem Schweißnähte zur Verbindung der Stützprofile (20) zu dem in Figur 5 gezeigten Profilrahmen gesetzt werden.

Nach der Vermessung und Ausrichtung bzw. Korrektur der Roboterbahn und der vorgesehenen Schweißnaht (13) wird das Deckblech (17) auf die Stegenden gelegt und gespannt. Anschließend werden die verdeckten Stege (16) mit dem vom Manipulator (6) entlang der ermittelten und ggf. korrigierten Bahn geführten Strahl (3) durch das Deckblech (17) hindurch geschweißt. Hierbei werden in der vorbeschriebenen Weise die Rohrstrukturen (14) und die Sitzstruktur (15) gebildet. Die Schweißnähte (13) befinden sich dabei an der Rückseite (19) des Deckblechs (17).

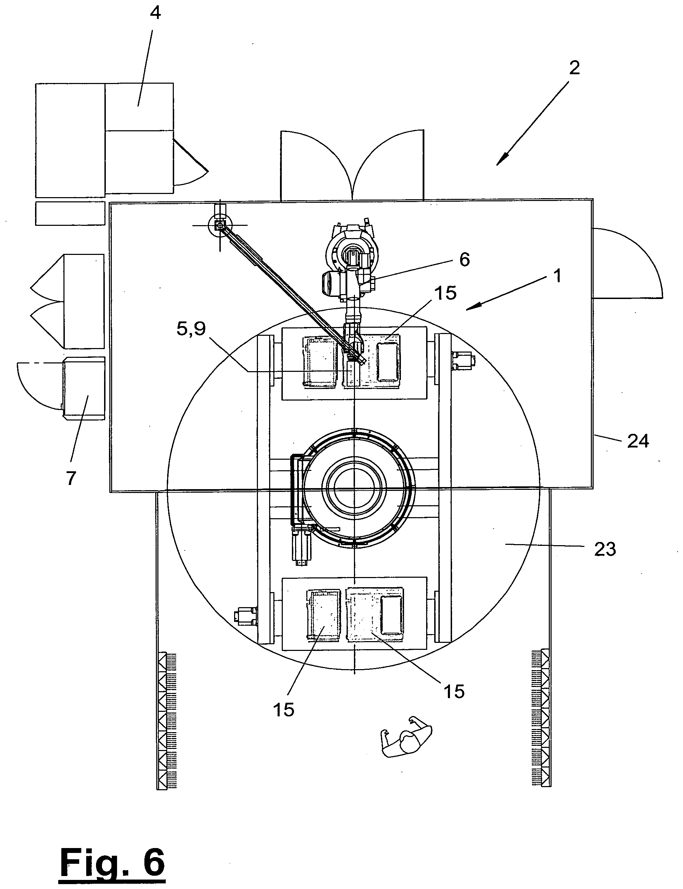

Figur 6 zeigt beispielhaft eine Schweißstation (2), in der ein oder mehrere der vorbeschriebenen Schweißeinrichtungen (1) angeordnet sind. Die Schweißstation (2) weist eine Laserkabine (24) auf, in der der Manipulator (6) mit dem Strahlkopf (5) und der Messeinrichtung (9) angeordnet ist. Die Laserquelle (4) kann sich außerhalb der Kabine (24) befinden und kann über eine flexible Leitung mit einem drehbaren Galgen mit dem Remote-Laserkopf (5) verbunden sein. Die Schweißstation (2) weist ferner eine Bauteilzuführung (23) auf, die z.B. als Drehtisch ausgebildet ist und zwei Spannstellen für die Sitzstruktur (15) und deren Teile (16,17) aufweist. Das Auflegen der Deckbleche (17) kann nach dem Vermessen der Stege (16) durch einen Werker außerhalb der Kabine (24) oder durch eine mechanische Einlegevorrichtung (nicht dargestellt), ggf. auch durch den den Manipulator (6), im Kabineninnenraum bewirkt werden.

Abwandlungen der gezeigten und beschriebenen Ausführungsformen sind in verschiedener Weise möglich. Dies betrifft einerseits die Ausbildung der Sitzstruktur (15). Figur 6 zeigt hierzu neben der Ausführung von Figur 5 eine weitere Variante. Auch der Sitz (21) kann variieren und andere Einsatzbereiche haben. Die Stützprofile (20) können anders ausgebildet sein und eine andere Anordnung, Form und Ausrichtung der Stege (16) besitzen. Sie müssen auch nicht zu einem geschlossenen Rahmen untereinander verbunden sein. Variabel ist auch die Ausbildung des Strahlkopfes (5) und der Messeinrichtung (9). Der Strahlkopf (5) kann auch mit einem geringeren Abstand zum Deckblech (17) gehalten und geführt werden. Er muss auch nicht wie in der gezeigten Ausführungsform als Remote-Laser ausgebildet sein. Ferner kann der Manipulator (6) in seiner Ausbildung und Anordnung variieren.

### BEZUGSZEICHENLISTE

- 1: Schweißeinrichtung
- 2: Schweißstation
- 3: Strahl, Laserstrahl
- 4: Strahlquelle, Laserquelle
- 5: Strahlkopf
- 6: Manipulator, Roboter
- 7: Manipulatorsteuerung
- 8: Hand
- 9: Messeinrichtung
- 10: optische Erfassungseinrichtung
- 11: Bildaufnahmeeinrichtung, Kamera
- 12: Bildauswertung
- 13: Schweißnaht
- 14: geschlossene Rohrstruktur
- 15: Sitzstruktur, Lehnenstruktur
- 16: Steg
- 17: Deckblech, Hinterlehne
- 18: Vorderseite
- 19: Rückseite
- 20: Stützprofil, U-Profil
- 21: Bauteil, Fahrzeugsitz
- 22: Aufspannung
- 23: Bauteilzuführung
- 24: Kabine, Laserkabine

## Patentansprüche

1. Verfahren zum Schweißen von Sitzstrukturen (15) von Sitzen (21), insbesondere Fahrzeugsitzen, wobei ein plattenförmiges Deckblech (17) der Sitzstruktur (15) mit mindestens einem Stützprofil (20) verschweißt wird, wobei von dem Stützprofil (20) und dem Deckblech (17) eine geschlossene Rohrstruktur (14) gebildet wird, **dadurch gekennzeichnet, dass** das Deckblech (17) an seiner Vorderseite (18) mit den freien Stirnenden von Stegen (16) von mindestens einem U-förmigen Stützprofil (20) mittels eines von einem mehrachsigen Manipulator (6) geführten und auf die Rückseite (19) des Deckblechs (17) gerichteten energiereichen Strahls (3) verschweißt wird, wobei zunächst die Stege (16) mit einer vom Manipulator (6) mitgeführten Messeinrichtung (9) vermessen werden, wobei die Messeinrichtung (9) eine optische Erfassungseinrichtung (14) aufweist, deren Blickrichtung mit dem Strahl (3) fluchtet, wobei die vom Manipulator (6) verfolgte Bahn und die vorgesehene Schweißnaht (13) nach dem Messergebnis ausgerichtet werden und anschließend das Deckblech (17) aufgelegt und danach an die Stege (16) geschweißt wird.

2. Verfahren nach Anspruch, **dadurch gekennzeichnet, dass** mit einem Laserstrahl (3) geschweißt wird.

3. Verfahren nach Anspruch 1 oder 2, **dadurch gekennzeichnet, dass** von der Messeinrichtung (9) die Stege (16) mit der optischen Erfassungseinrichtung (10) bildmäßig erfasst werden, wobei hieraus die Breite, Form, Lage und Ausrichtung der Stege (16) ermittelt und an die Manipulatorsteuerung (7) zur Überprüfung und evtl. Korrektur der Bahn übermittelt werden.

4. Verfahren nach Anspruch 1, 2 oder 3, **dadurch gekennzeichnet, dass** die Naht (13) mittig entlang der Stege (16) gelegt wird.

5. Verfahren nach Anspruch 1, 2 oder 3, **dadurch gekennzeichnet, dass** die Stege (16) an mehreren Stellen entlang ihrer Erstreckung vermessen werden.

6. Verfahren nach einem der vorhergehenden Ansprüche, **dadurch gekennzeichnet, dass** der Strahl (3) von einem manipulatorgeführten Strahlkopf (5) mit Abstand zur Arbeitsstelle emittiert wird.

7. Schweißeinrichtung zum Schweißen von Sitzstrukturen (15) von Sitzen (21), insbesondere Fahrzeugsitzen, die mindestens ein plattenförmiges Deckblech (17) und mindestens ein U-förmiges Stützprofil (20) mit Stegen (16) aufweisen, wobei die Schweißeinrichtung (1) eine Strahlquelle (4) und mindestens einen mehrachsigen Manipulator (6) mit einem Strahlkopf (5) zur Emission eines energiereichen Strahls (3) und mit einer mitgeführten Messeinrichtung (9) aufweist, die mit der Manipulatorsteuerung (7) verbunden ist, **dadurch gekennzeichnet, dass** die Messeinrichtung (9) eine optische Erfassungseinrichtung (14) aufweist, deren Blickrichtung mit dem Strahl (3) fluchtet, wobei die Erfassungseinrichtung (14) mit einer Bildauswertung (12) die Breite, Form, Lage und Ausrichtung der freien Enden der Stege (16) ermittelt und wobei die Schweißeinrichtung (1) zur Durchführung des Verfahrens nach einem der Ansprüche 1 bis 6 ausgebildet ist, wobei zunächst die Stege (16) mit der vom Manipulator (6) mitgeführten Messeinrichtung (9) und deren Erfassungseinrichtung (14) vermessen werden und die vom Manipulator (6) verfolgte und in der Manipulatorsteuerung (7) gespeicherte Bahn und die vorgesehene Schweißnaht (13) nach dem Messergebnis ausgerichtet werden, und anschließend das aufgelegte Deckblech (17) mit dem auf seine Rückseite (19) gerichteten energiereichen Strahls (3) an die Stege (16) geschweißt wird.

8. Schweißeinrichtung nach Anspruch 7, **dadurch gekennzeichnet, dass** die optische Erfassungseinrichtung (10) eine Bildaufnahmeeinrichtung (11) aufweist.

9. Schweißeinrichtung nach Anspruch 7 oder 8, **dadurch gekennzeichnet, dass** die Messeinrichtung (9) an oder im Strahlkopf (5) angeordnet ist.

10. Schweißeinrichtung nach Anspruch 7, 8 oder 9, **dadurch gekennzeichnet, dass** die Strahlquelle (5) mindestens einen energiereichen Laserstrahl (3) und ggf. einen abgeschwächten Pilotstrahl (4) emittiert.

11. Schweißeinrichtung nach einem der Ansprüche 7 bis 10, **dadurch gekennzeichnet, dass** der Strahlkopf (6) als Remote-Laser ausgebildet ist.

12. Schweißeinrichtung nach einem der Ansprüche 7 bis 11, **dadurch gekennzeichnet, dass** die Schweißeinrichtung (1) eine Aufspannung (22) zur Fixierung der Stützprofile (20) aufweist.

13. Sitz, insbesondere Fahrzeugsitz (21), mit einer Sitzstruktur (15), die mindestens ein plattenförmiges Deckblech (17) und mindestens ein Stützprofil (20) aufweist, wobei das Deckblech (17) an seiner im Verbindungsbereich ebenen Vorderseite (18) mit den freien, planen Stirnenden von Stegen (16) von mindestens einem U-förmigen Stützprofil (20) unter Bildung einer geschlossenen Rohrstruktur (14) im T-Stoß stumpf verschweißt ist, **dadurch gekennzeichnet, dass** die von einem energiereichen Strahl (3) gebildeten Schweißnähte (13) sich an der Rückseite (19) des Deckblechs (17) befinden und durch das Deckblech (17) hindurch auf die Stirnenden der Stege (16) eingeschweißt sind.

## Claims

1. Process for welding seat structures (15) of seats (21), in particular vehicle seats, wherein a plate-shaped cover plate (17) of the seat structure (15) is welded to at least one supporting profile (20), a closed tube structure (14) being formed by the supporting profile (20) and the cover plate (17), **characterized in that** the cover plate (17) is welded on its front side (18) to the free end faces of webs (16) of at least one U-shaped supporting profile (20) by means of a high-energy beam (3) that is guided by means of a multiaxial manipulator (6) and is directed onto the rear side (19) of the cover plate (17),
first the webs (16) being measured with a measuring device (9) carried along by the manipulator (6), the measuring device (9) having an optical recording device (10), the viewing direction of which is in line with the beam (3), the path that is followed by the manipulator (6) and the weld seam (13) that is provided being aligned on the basis of the result of the measurement and the cover plate (17) subsequently being placed on, and then welded onto the webs (16).

2. Process according to Claim 1, **characterized in that** welding is performed with a laser beam (3).

3. Process according to Claim 1 or 2, **characterized in that** the webs (16) are recorded in the form of images by the measuring device (9) with the optical recording device (10), the width, shape, position and alignment of the webs (16) being determined therefrom and transmitted to the manipulator controller (7) for checking and possibly correcting the path.

4. Process according to Claim 1, 2 or 3, **characterized in that** the seam (13) is placed centrally along the webs (16).

5. Process according to Claim 1, 2 or 3, **characterized in that** the webs (16) are measured at a number of locations along their extent.

6. Process according to one of the preceding claims, **characterized in that** the beam (3) is emitted by a manipulator-guided beam head (5) at a distance from the working location.

7. Welding device for welding seat structures (15) of seats (21), in particular vehicle seats, which have at least one plate-shaped cover plate (17) and at least one U-shaped supporting profile (20) with webs (16), the welding device (1) having a beam source (4) and at least one multiaxial manipulator (6) with a beam head (5) for the emission of a high-energy beam (3) and with a carried-along measuring device (9), which is connected to the manipulator controller (7), **characterized in that** the measuring device (9) has an optical recording device (10), the viewing direction of which is in line with the beam (3), the recording device (10) determining with an image evaluation (12) the width, shape, position and alignment of the free ends of the webs (16), and the welding device (1) being designed for carrying out the process according to one of Claims 1 to 6, first the webs (16) being measured with the measuring device (9) carried along by the manipulator (6) and its optical recording device (10), and the path that is followed by the manipulator (6) and stored in the manipulator controller (7) and the weld seam (13) that is provided being aligned on the basis of the result of the measurement, and the placed-on cover plate (17) subsequently being welded onto the webs (16) by the high-energy beam (3) directed onto its rear side (19).

8. Welding device according to Claim 7, **characterized in that** the optical recording device (10) has an image capturing device (11).

9. Welding device according to Claim 7 or 8, **characterized in that** the measuring device (9) is arranged on or in the beam head (5).

10. Welding device according to Claim 7, 8 or 9, **characterized in that** the beam source (5) emits at least one high-energy laser beam (3) and possibly an attenuated pilot beam (4).

11. Welding device according to one of Claims 7 to 10, **characterized in that** the beam head (6) is designed as a remote laser.

12. Welding device according to one of Claims 7 to 11, **characterized in that** the welding device (1) has a jig (22) for fixing the supporting profiles (20).

13. Seat, in particular vehicle seat (21), with a seat structure (15), which has at least one plate-shaped cover plate (17) and at least one supporting profile (20), the cover plate (17) being butt-welded on its front side (18), which is flat in the connecting region, to the free, planar end faces of webs (16) of at least one U-shaped supporting profile (20), with the formation of a closed tube structure (14) in the T joint, **characterized in that** the weld seams (13) formed by a high-energy beam (3) are located on the rear side (19) of the cover plate (17) and are welded through the cover plate (17) onto the end faces of the webs (16).

## Revendications

1. Procédé destiné au soudage de structures assises (15) de sièges (21), en particulier de sièges de véhicule, où une tôle de couverture (17) en forme de plaques est soudée à la structure de siège (15) avec au moins un profilé de soutien (20), où une structure tubulaire (14) fermée est formée par le profilé de soutien (20) et par la tôle de couverture (17), **caractérisé en ce que** la tôle de couverture (17) est soudée au niveau de sa face avant (18) avec les libres extrémités frontales des traverses (16) d'au moins un profilé de soutien (20) en forme de U, au moyen d'un faisceau (3) chargé de haute énergie, guidé par un manipulateur (6) à plusieurs axes et dirigé sur la face arrière (19) de la tôle de couverture (17) et où les traverses (16) sont d'abord mesurées au moyen d'un mécanisme de mesure (9) entraîné par le manipulateur (6), où le mécanisme de mesure (9) présente un mécanisme de détection (10) optique, dont la direction de visée est alignée sur le faisceau (3), où la trajectoire poursuivie par le manipulateur (6) et le joint de soudure (13) prévu sont réajustés après le résultat de mesure et la tôle de couverture (17) est ensuite posée, puis soudée aux traverses (16).

2. Procédé selon la revendication 1, **caractérisé en ce que** la soudure est réalisée au moyen d'un rayon laser (3).

3. Procédé selon la revendication 1 ou 2, **caractérisé en ce que** les traverses (16) sont détectées suivant une image par le mécanisme de mesure (9), au moyen du mécanisme de détection (10) optique, où la largeur, la forme, la position et l'orientation des traverses (16) sont déterminées à partir de cela et transmises consécutivement à la commande du manipulateur (7) en vue de la vérification de la trajectoire et de sa correction éventuelle.

4. Procédé selon la revendication 1, 2 ou 3, **caractérisé en ce que** le joint de soudure (13) est positionné au centre, le long des traverses (16).

5. Procédé selon la revendication 1, 2 ou 3, **caractérisé en ce que** les traverses (16) sont mesurées en plusieurs endroits le long de leur cheminement.

6. Procédé selon l'une des revendications précédentes, **caractérisé en ce que** le faisceau (3) est émis par une tête de faisceau (5) dirigée par le manipulateur, en observant une distance par rapport au poste de travail.

7. Mécanisme de soudage destiné au soudage de structures assises (15) de sièges (21), en particulier de sièges de véhicule, lesquelles présentent au moins une tôle de couverture (17) en forme de plaques et au moins un profilé de soutien (20) en forme de U, lequel est équipé de traverses (16), où le mécanisme de soudage (1) présente une source de rayonnement (4) et au moins un manipulateur (6) à plusieurs axes avec une tête de faisceau (5) en vue de l'émission d'un faisceau (3) chargé de haute énergie et avec un mécanisme de mesure (9) entraîné, lequel est raccordé à la commande du manipulateur (7), **caractérisé en ce que** le mécanisme de mesure (9) présente un mécanisme de détection (10) optique, dont la direction de visée est alignée sur le faisceau (3), où le mécanisme de détection (10) détermine la largeur, la forme, la position et l'orientation des extrémités libres des traverses (16) au moyen d'une analyse des images (12) et où le mécanisme de soudage (1) destiné à la réalisation du procédé est conçu selon l'une des revendications 1 à 6, où les traverses (16) sont d'abord mesurées au moyen du mécanisme de mesure (9) entraîné par le manipulateur (6) et de leur mécanisme de détection (10) et la trajectoire poursuivie par le manipulateur (6) et enregistrée dans la commande du manipulateur (7) et le joint de soudure (13) prévu sont réajustés après le résultat de mesure, puis la tôle de couverture (17) appliquée est ensuite soudée aux traverses (16) au moyen du faisceau (3), chargé de haute énergie et dirigé sur sa face arrière (19).

8. Mécanisme de soudage selon la revendication 7, **caractérisé en ce que** le mécanisme de détection (10) optique présente un mécanisme d'enregistrement des images (11).

9. Mécanisme de soudage selon la revendication 7 ou 8, **caractérisé en ce que** le mécanisme de mesure (9) est disposé au niveau de la tête de faisceau (5) ou dans la tête de faisceau.

10. Mécanisme de soudage selon la revendication 7, 8 ou 9, **caractérisé en ce que** la source du faisceau (5) émet au moins un rayon laser (3) chargé de haute énergie et, le cas échéant, un faisceau pilote (4) affaibli.

11. Mécanisme de soudage selon l'une des revendications 7 à 10, **caractérisé en ce que** la tête de faisceau (6) se présente sous la forme d'un laser à distance.

12. Mécanisme de soudage selon l'une des revendications 7 à 11, **caractérisé en ce que** le mécanisme de soudage (1) présente un dispositif de serrage (22) destiné à la fixation du profilé de soutien (20).

13. Siège, en particulier siège de véhicule (21), avec une structure de siège (15) qui présente au moins une tôle de couverture (17) en forme de plaques et au moins un profilé de soutien (20), où la tôle de couverture (17) est soudée bord à bord, dans le joint en T, au niveau de sa face avant (18) plane dans la zone de jonction, avec les extrémités frontales libres et planes des traverses (16) d'au moins un profilé de soutien (20) en forme de U, en formant une structure tubulaire (14) fermée, **caractérisé en ce que** les joints de soudure (13) formés par un faisceau (3) chargé de haute énergie se trouvent au niveau de la face arrière (19) de la tôle de couverture (17) et sont soudés à travers la tôle de couverture (17) sur les extrémités frontales des traverses (16).
